Europäisches Patentamt

European Patent Office

Office européen des brevets

(11) Numéro de publication: **0 161 984**
**B1**

# (12) FASCICULE DE BREVET EUROPÉEN

(45) Date de publication du fascicule du brevet:
**13.01.88**

(51) Int. Cl.⁴: **H 02 B 1/20,** H 01 R 9/24

(21) Numéro de dépôt: **85400863.8**

(22) Date de dépôt: **03.05.85**

(54) **Bloc de raccordement pour un tableau de distribution électrique.**

(30) Priorité: **09.05.84 FR 8407392**

(43) Date de publication de la demande:
**21.11.85 Bulletin 85/47**

(45) Mention de la délivrance du brevet:
**13.01.88 Bulletin 88/2**

(84) Etats contractants désignés:
**AT BE CH DE GB IT LI NL SE**

(56) Documents cité:
**DE-B-1 268 249**
**FR-A-2 437 715**

(73) Titulaire: **MERLIN GERIN, Rue Henri Tarze, F-38050 Grenoble Cédex (FR)**

(72) Inventeur: **Buet, Jacques, Chevillard, F-73250 St. Pierre D'Albigny (FR)**
Inventeur: **Rebesco, Joseph, Impasse de la Villa Romaine Arbin, F-73800 Montmelian (FR)**

(74) Mandataire: **Kern, Paul, Merlin Gerin Sce. Brevets 20, rue Henri Tarze, F-38050 Grenoble Cedex (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

L'invention est relative à un bloc de raccordement multipolaire allongé en matière isolante moulée pour un tableau basse tension de distribution électrique, ledit bloc enrobant un jeu de barres superposées s'étendlant dans la direction longitudinal, à la partie arrière du bloc.

Un bloc de raccordement ou de jonction du genre mentionné (voir FR-A-2 437 715) permet l'alimentation par le jeu de barres de différents départs, le jeu de barres étant connecté aux conducteurs d'arrivée. Dans les systèmes modulaires, notamment les tableaux électriques basse tension, il est important de disposer d'éléments standards permettant de répondre à toutes ou à un grand nombre de dispositions particulières. La présente invention vise à réaliser un bloc de raccordement destiné à être placé en tête du tableau en étant raccordé aux conducteurs d'arrivée.

Le bloc de raccordement selon l'invention est caractérisé en ce qu'il comporte d'une part dans la partie médiane avant du bloc des plages de connexion coplanaires échelonnées suivant ladite direction longitudinale, chaque plage étant connectée par une barrette transversale à l'une des barres, lesdites plages étant susceptibles de recevoir des cosses ou des barres de connexion de conducteurs ou câbles d'arrivée et d'autre part à côté de ladite partie médiane des borniers de distribution multipolaires raccordés audit jeu de barres par des barrettes transversales.

Dans les tableaux à alimentation par le haut, par exemple par des câbles ou un appareil tel qu'un disjoncteur ou un interrupteur placé à l'entrée du tableau, le bloc de raccordement est disposé dans la partie supérieure du tableau, les plages de connexion étant disposées en regard des câbles d'arrivée ou de l'appareil d'alimentation. Le bloc de raccordement est fixé à la paroi du fond du tableau ou à des montants verticaux par tout moyen approprié, le bloc pouvant s'étendre horizontalement sur toute la largeur ou sur une partie de la largeur du tableau. Le bornier à vis peut recevoir un jeu de barres verticales d'alimentation d'une ou de plusieurs rangées d'appareils modulaires du tableau, ce jeu de barres ayant par exemple une intensité maximale de 400 Ampères. Ce mode de distribution est approprié à des appareils standards alimentés par des systèmes de peigne ou de jeu de barres à départs échelonnés. Le bornier à ressort, qui utilise des bornes à cage dont la force de serrage du conducteur est dérivée d'un ressort mécanique permet l'alimentation d'appareils spéciaux par des conducteurs souples directement à partir du bloc de raccordement. Le bornier à ressort comporte avantageusement quatre bornes par phase pour l'alimentation individuelle de quatre appareils du tableau.

Selon un développement de l'invention, les plages de connexion, qui peuvent recevoir des cosses de câbles d'alimentation ou des barrettes de raccordement à un appareil tel qu'un disjoncteur ou un interrupteur disposé en amont, sont prolongées par des plages de dérivation permettant la connexion d'un jeu de barres de distribution. Ce jeu de barres de distribution peut alimenter un appareil de forte intensité, ou par l'intermédiaire d'un bloc de jonction ou d'un jeu de barres divisionnaires une série d'appareils divisionnaires.

Le bloc de raccordement est du type tétrapolaire, par exemple d'un calibre inférieur ou égal à 400 Ampères, et il comporte des plages de connexion de terre ou des borniers de terre, qui encadrent avantageusement les plages de connexion. Le corps du bloc de raccordement est en matière plastique moulée de forme générale parallélépipédique dont la face avant porte les moyens de connexion, notamment les vis des borniers et des plages de connexion, tandis que le jeu de barres est disposé dans la partie arrière du bloc. Les connexions entre les barres et les bornes sont réalisées par des barrettes s'étendant transversalement au jeu de barres et alimentant chacune au moins deux bornes superposées.

D'autres avantages et caractéristiques ressortiront plus clairement de la description qui va suivre d'un mode de mise en oeuvre de l'invention, donné à titre d'exemple non limitatif et représenté aux dessins annexés, dans lesquels:
- la figure 1 est une vue schématique en élévation d'un tableau de distribution basse tension équipé d'un bloc de raccordement selon l'invention;
- la figure 2 est une vue à échelle agrandie du bloc de raccordement, selon la figure 1, les borniers étant partiellement arrachés et l'une des plages de connexion étant supposée enlevée;
- les figures 3, 4 et 5 sont des coupes respectivement suivant les lignes III-III, IV-IV et V-V de la figure 2;
- la figure 6 est une vue de derrière du bloc selon la figure 2;
- la figure 7 est une vue de dessous du bloc selon la figure 2.

Sur les figures, un tableau modulaire 10 de distribution électrique basse tension comporte trois rangées 12, 14, 16 d'appareils électriques, les deux rangées supérieures 12, 14 comprenant des appareils standards 17 alimentés par des jeux de barres 18 horizontaux, qui se raccordent à l'une de leurs extrémités à un jeu de barres verticales 20. La rangée inférieure 16 comporte des appareils spéciaux 19. En tête du tableau et à la partie supérieure de celui-ci est disposé un bloc de raccordement 22 auquel sont connectés les quatre conducteurs 24 d'alimentation du tableau 10 du type tétrapolaire. Les appareils des rangées 12, 14 sont connectés par les jeux de barres 18, 20 au bloc de raccordement 22, tandis que les appareils de la rangée 16 sont connectés par des fils 26 à ce bloc de raccordement 22. Le bloc 22 de forme allongée s'étend parallèlement aux rangées 12, 14, 16 dans la partie supérieure du tableau 10, les conducteurs d'arrivée 24 passant par un orifice ménagé dans le toit ou la tôle supérieure du tableau ou coffret 10.

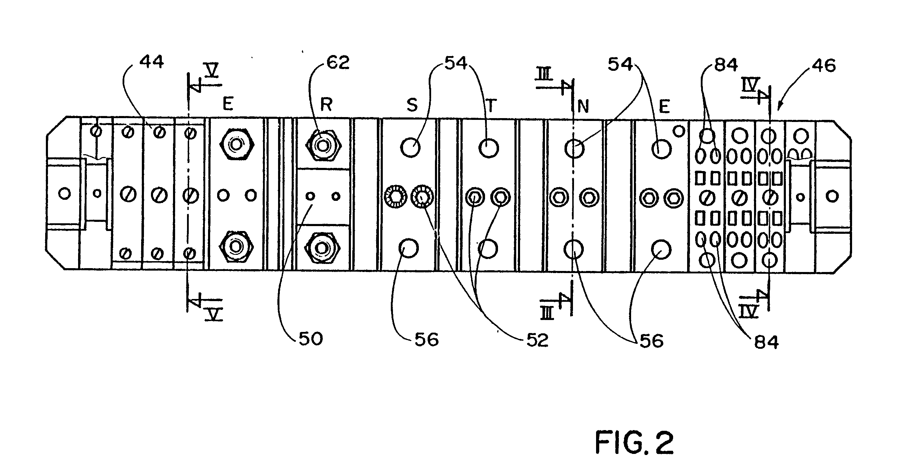

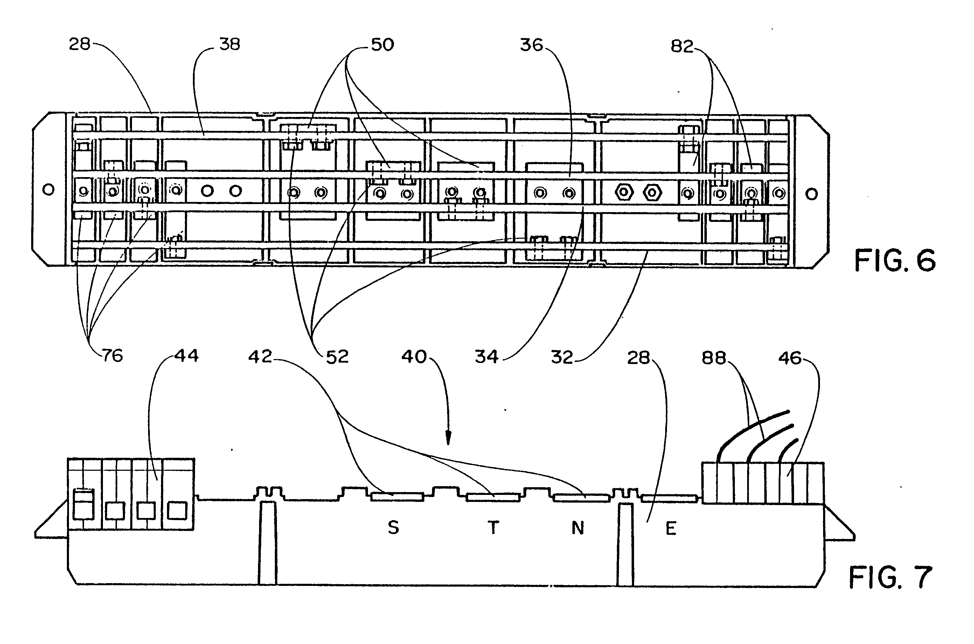

Le corps 28 du bloc 22 de forme parallélépipédique est en matière plastique isolante moulée et présente du côté arrière une chambre 30 d'un logement d'un jeu de barres à quatre barres 32, 34, 36, 38 superposées s'étendant sur toute la longueur du bloc 22. Le corps 28 présente dans sa partie médiane une face avant 40 de fixation de plages de connexion 42 encadrées de part et d'autre de borniers 44, 46. Aux quatre plages 42 centrales R, S, T, N sont raccordés par des cosses 48 les conducteurs ou câbles d'arrivée 24, les deux plages d'extrémités E recevant des conducteurs de mise à la terre ou d'autres connexions (non représentées). Les quatre plages 42 centrales sont raccordées respectivement aux barres 32, 34, 36, 38 par des barrettes de connexion 50 s'étendant transversalement au bloc 22, le raccordement étant réalisé par des vis 52. Chaque plage 42 est constituée par une plaque rectangulaire présentant en son centre deux orifices de passage des vis 52 de connexion à la barrette transversale 50, et dans les parties d'extrémités des orifices 54, 56 de passage de vis de raccordement 58, 60. Sur les figures 2 et 7, la plage 42 de la phase R est supposée enlevée pour montrer l'extrémité de la barrette de connexion 50 et le logement d'un écrou 62 constituant avec la vis 58 un boulon de fixation de la cosse 48 sur la plage 42. Un écrou 64 peut d'une manière analogue coopérer avec la vis 60 pour la fixation d'un conducteur ou d'une barre 66 à la plade 42. Les logements des écrous 62, 64 pratiqués dans le corps 28 empêchent toute rotation des écrous lors du serrage des vis 58, 60. Les raccordements aux autres plages 42 s'effectuent de la même manière et il est inutile de les décrire en détail. Les plages d'extrémités 42 ne sont pas raccordées au jeu de barres 32, 34, 36 , 38 et constituent de simples connecteurs ou barrettes de connexion, notamment de mise à la terre. Le jeu de barres du bloc de raccordement 22 est raccordé par les plages 42 et les barrettes 50 aux câbles d'alimentation 24 du tableau 10.

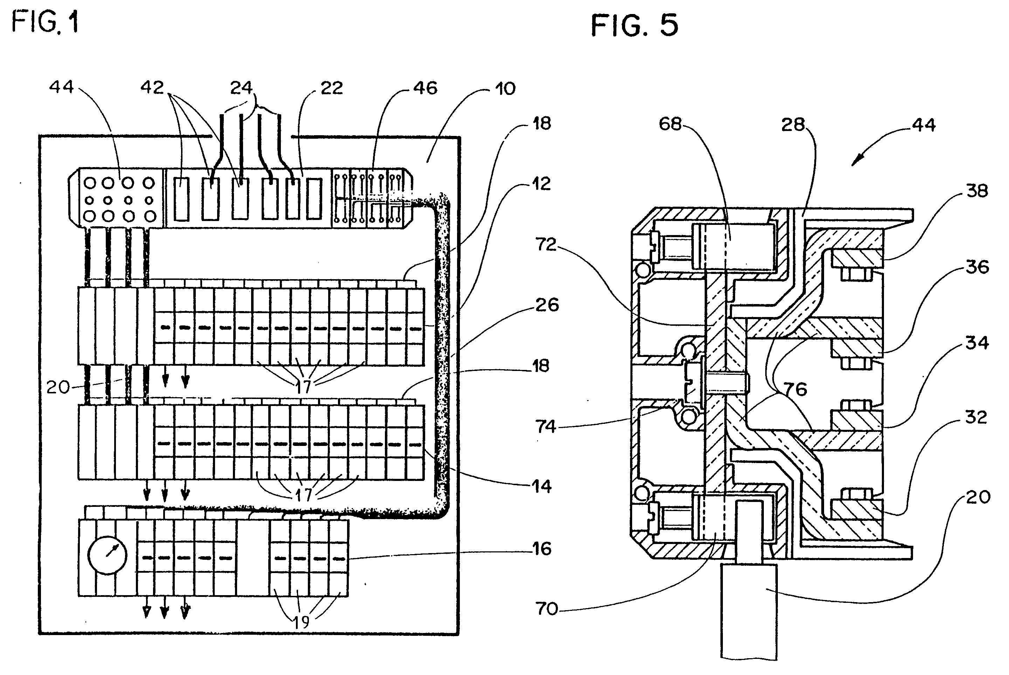

En se référant plus particulièrement à la figure 5, on voit que le bornier 44 est du type à bornes à vis, chaque phase R, S, T, N comprenant deux bornes 68, 70 reliées par une barre 72 fixée par une vis 74 à une barrette transversale 76 de connexion au jeu de barres 32, 34, 36, 38. Ces barrettes transversales 76 sont analogues à celles 50 décrites ci-dessus et sont échelonnées le long du bornier 44. Les deux bornes à vis 68, 70 d'une même phase sont superposées pour un départ vers le bas du tableau 10, ainsi qu'un départ vers le haut, seuls les départs vers le bas étant utilisés dans l'exemple représenté sur la figure 1, pour la connexion du jeu de barres verticales 20.

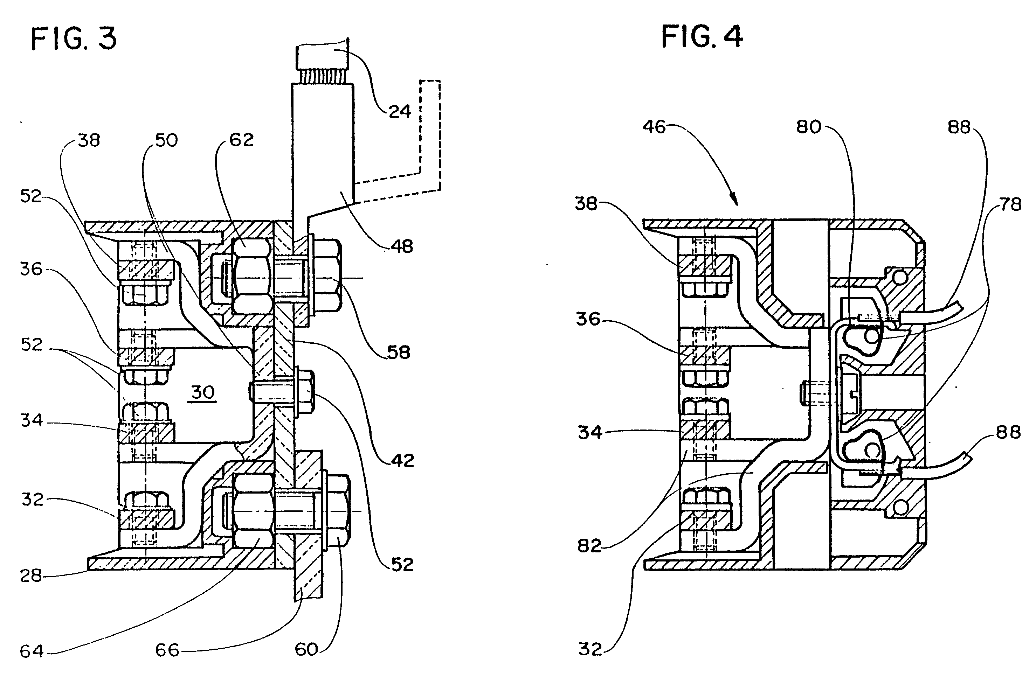

La figure 4 représente le bornier 46 du type à ressort comprenant pour chaque phase R, S, T, N quatre connecteurs à ressort type cage 78 commercialement dénommé WAGO. Les quatre connecteurs à ressort 78 d'une même phase sont disposés en rectangle sur un même support 80 raccordé à des barrettes de connexion 82 transversales reliées au jeu de barres 32, 34, 36, 38 d'une manière analogue à celle décrite ci-dessus en relation aux barrettes de connexion transversales 50 et 76. Les bornes à ressort 78 sont disposées en regard d'orifices 84 ménagés dans la face avant du bornier 46 pour le passage de fils ou conducteurs 88 serrés par les bornes à ressort 78. Il est inutile de décrire en détail les borniers 44, 46, qui sont bien connus des spécialistes.

Les pièces sous tension des borniers 44, 46 sont enrobées par la matière isolante du bloc 28, seules les plages 42 étant accessibles, ces dernières pouvant être recouvertes par un capot isolant (non représenté). Les possibilités de raccordement offertes par le bloc 22 permettent l'alimentation de la quasi-totalité des tableaux basse tension à partir d'un élément standard. Dans l'exemple représenté sur la figure 1, d'un bloc d'alimentation de 400 Ampères, le bornier à vis 44 permet le raccordement de deux départs d'une section maximale de 35 mm$^2$ chacun par phase, ces départs pouvant être des barres, peignes ou conducteurs insérés dans les bornes à vis. Le bornier 46 est approprié à une distribution par fils ou conducteurs 26 de quatre départs par phase, chacun ayant une section maximale de 10 mm$^2$. Les plages 42 se prêtent au raccordement d'un jeu de barres de distribution de forte intensité, par exemple de 160, 250 ou 400 Ampères. Il est clair que ces valeurs sont données à titre indicatif, le bloc de raccordement 22 pouvant être conçu pour des intensités différentes. Le bloc de raccordement 22 en tête du tableau 10 permet un raccordement de câbles d'alimentation 24 par des cosses 48 de la manière représentée à la figure 1, mais il est clair que le bloc 22 peut être alimenté à partir d'un disjoncteur ou interrupteur disposé à l'entrée du tableau 10 en faisant appel à des barrettes de connexion vissées sur les plages 42. Dans le cas d'alimentation du tableau par la base le bloc de raccordement 22 sera bien entendu disposé dans le fond du tableau 10 ou en tout autre emplacement approprié. La disposition des appareils sur le tableau 10 est quelconque, et des appareils d'une même rangée peuvent être alimentés par le bornier 44 et le bornier 46 selon les intensités et les modes de raccordement appropriés.

## Revendications

1. Bloc (22) de raccordement multipolaire allongé en matière isolante moulée pour un tableau (10) basse tension de distribution électrique, ledit bloc (22) enrobant un jeu de barres (32, 34, 36, 38) superposées s'étendant dans la direction longitudinale à la partie arrière du bloc, caractérisé en ce qu'il comporte d'une part dans la partie médiane avant du bloc des plages (42) de connexion coplanaires échelonnées suivant ladite direction longitudinale, chaque plage (42) étant connectée par une barrette (50) transversale à l'une des barres (32, 34, 36, 38), lesdites plages (42) étant susceptibles de recevoir des cosses (48) ou des barres de connexion de conducteurs ou câbles (24) d'arrivée et d'autre part à côté de ladite partie médiane des borniers (44, 46) de distribution multipolaires raccordés audit jeu de barres (32-38) par des barrettes (76, 82) transversales.

2. Bloc de raccordement selon la revendication 1, caractérisé en ce que les bornes (68, 70; 78) des différents pôles desdits borniers (44, 46) de distribution multipolaires sont échelonnées et alignées suivant la direction longitudinale du bloc (22).

3. Bloc de raccordement selon la revendication 1 ou 2, caractérisé en ce que l'un (44) des borniers comporte des bornes à vis (68, 70) susceptibles de recevoir des fils, des peignes ou des barres (20) de distribution.

4. Bloc de raccordement selon la revendication 1, 2 ou 3, caractérisé en ce que l'un (46) des borniers comporte des bornes (78) à ressort pour le raccordement de fils (88) de connexion.

5. Bloc de raccordement parallélépipédique selon la revendication 1, 2, 3 ou 4, caractérisé en ce que les vis ou moyens de connexion associés auxdits borniers (44, 46) et plages (42) sont accessibles de la face avant du bloc (22).

6. Bloc de raccordement selon la revendication 5, caractérisé en ce que lesdits borniers (44, 46) comportent par pôle deux bornes (68, 70; 78) superposées alignées verticalement.

7. Bloc de raccordement selon l'une quelconque des revendications précédentes, caractérisé en ce que lesdites plages (42) de connexion sont prolongées pour constituer des plages de dérivation pour le raccordement d'un jeu (66) de barres de distribution de forte intensité.

8. Bloc de raccordement selon l'une quelconque des revendications précédentes, caractérisé en ce qu'il comporte une plage (42) de connexion de terre juxtaposée auxdites plages de connexion.

9. Bloc de raccordement selon l'une quelconque des revendications précédentes, caractérisé en ce qu'il est du type tétrapolaire.


**Patentansprüche**

1. Mehrpoliger laenglicher Anschlussblock (22) aus Isolier-Guss-Material fuer eine lektrisches Niederspannungs-Schaltfeld (10), wobei der genannte Block (22) uebereinander angeordnete Sammelschienen (32, 34, 36, 38) umgibt, die sich in der Laengsrichtung am hinteren Teil des Blockes erstrecken, dadurch gekennzeichnet, dass er einerseits in dem mittleren Vorderteil des Blockes koplanare Anschlussfahnen (42) aufweist, die gemaess der genannten Laengsrichtung gestaffelt sind, wobei jede Anschlussfahne (42) durch eine transversale Schiene (50) mit einer der Schienen (32, 34, 36, 38) verbunden ist und wobei die genannten Anschlussfahnen (42) Kabelschuhe (48) oder Verbindungsklemmen von Eingangsleitern oder -Kabeln (24) aufnehmen koennen, und dass er andererseits neben dem genannten mittleren Teil mehrpolige Verteiler-Klemmenleisten (44, 46) aufweist, die mit den genannten Sammelschienen (32-38) durch transversale Schienen (76, 82) verbunden sind.

2. Anschlussblock gemaess Anspruch 1, dadurch gekennzeichnet, dass die Klemmen (68, 70; 78) der verschiedenen Pole der genannten mehrpoligen Verteiler-Klemmenleisten (44, 46) gemaess der Laengsrichtung des Blockes (22) gestaffelt und ausgerichtet sind.

3. Anschlussblock gemaess Anspruch 1 oder 2, dadurch gekennzeichnet, dass eine der Klemmenleisten (44) Schraub-Klemmen (68, 70) aufweist, die Draehte, Kaemme oder Verteilerschienen (20) aufnehmen koennen.

4. Anschlussblock gemaess Anspruch 1, 2 oder 3, dadurch gekennzeichnet, dass eine der Klemmenleisten Feder-Klemmen (78) aufweist zum Anschluss der Verbindungsdraehte (88).

5. Parallelipedischer Anschlussblock gemaess Anspruch 1, 2, 3 oder 4, dadurch gekennzeichnet, dass die den genannten Klemmenleisten (44, 46) und Anschlussfahnen (42) zugeordneten Verbindungsschrauben oder -mittel von der Vorderseite des Blockes (22) aus zugaenglich sind.

6. Anschlussblock gemaess Anspruch 5, dadurch gekennzeichnet, dass die genannten Klemmenleisten (44, 46) je Pol zwei uebereinander angeordnete senkrecht ausgerichtete Klemmen (68, 70; 78) aufweisen.

7. Anschlussblock gemaess irgendeinem der vorhergehenden Ansprueche, dadurch gekennzeichnet, dass die genannten Anschlussfahnen (42) verlaengert sind, um Abzweigfahnen zu bilden fuer den Anschluss von Verteiler-Sammelschienen (66) von hoher Stromstaerke.

8. Anschlussblock gemaess irgendeinem der vorhergehenden Ansprueche, dadurch gekennzeichnet, dass er eine Erd-Anschlussfahne (42) aufweist, die neben den genannten Anschlussfahnen liegt.

9. Anschlussblock gemaess irgendeinem der vorhergehenden Ansprueche, dadurch gekennzeichnet, dass er vom Vierpol-Typ ist.


**Claims**

1. Multipolar long-shaped connecting block (22) of moulded insulating material for a low-tension electrical distribution board (10), said block (22) covering superposed busbars (32, 34, 36, 38) extending in the longitudinal direction at the rear part of the block, characterized in that it comprises on the one hand, in the middle front part of the block, coplanar connection lugs (42) spaced apart along said longitudinal direction, each lug (42) being connected to one of said bars (32, 34, 36, 38) by a transversal small bar, and said lugs (42) being apt to receive connecting bars (48) or lugs of input conductors or cables (24), and on the other hand, near said middle part, multipolar distribution terminal blocks (44, 46) connected to said busbars (32-38) by means of transversal rails (76, 82).

2. Connecting block according to claim 1, characterized in that the terminals (68, 70; 78) of the different poles of said multipolar distribution terminal blocks (44, 46) are spaced apart and aligned along the longitudinal direction of the block (22).

3. Connecting block according to claim 1 or 2, characterized in that one (44) of the terminal blocks (44) comprises screw terminals (68, 70) apt to receive wires, combs or distribution bars (20).

4. Connecting block according to claim 1, 2 or 3, characterized in that one (46) of the terminal blocks comprises spring terminals (78) for receiving connecting wires (88).

5. Parallelepipedic connecting block according to claim 1, 2, 3 or 4, characterized in that the connection screws or means, associated with said terminal blocks (44, 46) and lugs (42), are accessible from the front side of the block (22).

6. Connecting block according to claim 5, characterized in that said terminal blocks (44, 46) comprise per pole two superposed vertically aligned terminals (68, 70; 78).

7. Connecting block according to anyone of the preceding claims, characterized in that said connection lug (42) are extended to constitute shunt lugs for the connection of distribution busbars (66) of high current strength.

8. Connecting block according to anyone of the preceding claims, characterized in that it comprises an earth connection lug (42) juxtaposed to said connection lugs.

9. Connecting block according to anyone of the preceding claims, characterized in that it is of a four-pole type.

FIG. 5

FIG.1

FIG.2

0 161 984

FIG. 4

FIG. 3

FIG. 6

FIG. 7

S  T  N  E